# EUROPEAN PATENT APPLICATION

(11) **EP 2 248 742 A1**
(43) Date of publication of application: **10.11.2010**
(21) Application number: 10161896.5
(22) Date of filing: 04.05.2010
(51) Int. Cl.: B65G 23/06, B65G 23/26

(54) **Device for transmitting motion for conveyor belts**

(30) Priority: 08.05.2009 IT PD20090125
(71) Applicant: Alit S.r.l., Frazione, Marsango PD 35010 Campo San Martino (IT)
(72) Inventor: Rettore, Michele, 35010, SAN GIORGIO DELLE PERTICHE PD (IT); Malaman, Mirco, 35010, PIAZZOLA SUL BRENTA PD (IT)
(74) Representative: Modiano, Micaela Nadia

(57) **Abstract**

A device (10, 110) for transmitting motion for conveyor belts, comprising a driving shaft (11, 111) and a driven gear or toothed belt (12), engaged with a chain (13) for moving a conveyor belt (14), a torque limiter (15) being interposed between the driving shaft (11) and the gear (12).

## Description

The present invention relates to a device for transmitting motion for conveyor belts.

Currently known conveyor belts, particularly those used in the food industry, are constituted generally by one or more parallel chains, which are connected transversely by rod-like elements.

The ends of such rod-like elements are fixed to the corresponding and mutually opposite rings of such chains.

Links made of plastics or metallic material can be associated with the rod-like elements and cooperate in supporting the conveyed objects, forming a supporting surface at the spaces between one rod-like element and the next one.

Means for moving the chains of the conveyor belt in a given sliding direction and means for recovering a possible elongation of such belt are associated with such chain-type conveyor belts and are firmly connected to a gliding frame for the belt.

The traction means are constituted generally by motorized gears, the teeth of which engage the rings of the adjacent chains.

The means for recovering belt elongation act when the belt slows down or accelerates in one of its parts, tensioning the adjacent belt portions.

The belt, which generally has a certain elasticity, being thus strained, elongates; moreover, such belt can elongate due to irregularities in the pitch of the gears or of the rings, due to temperature variations, due to wear of the chains or gears, and due to the production tolerances of its components and other similar drawbacks.

However, excessive elongation can cause the belt to break or undergo a plastic deformation that makes it defective and with problems in operation.

An excessive tensioning of the belt may further cause the displacement of the conveyed products from the correct conveyance position, with the risk of compromising the subsequent operations of the process (such as for example boxing, packaging and the like) to which such products are subjected.

In currently known conveyor belts, the frame supports on a straight portion the driving means and, in the curved regions, which are typical for example of spiral belts, the means for recovering the elongation of the belt.

These known elongation recovery means are constituted by curved guides that have an elastically variable radius.

The tensioning of the belt causes the inner part of the elastic curve, actuated by the belt itself, to shorten its own radius, thus discharging the tensions that are accumulating on the belt.

These elastic curves, in addition to recovering belt elongation, also recover the accumulation of the belt that occurs at the outlet of each driving assembly.

Such elastic curves have a structure that is relatively complicated and expensive to provide.

The elastic curves in fact must be designed to size for each conveyor belt supporting frame and as such must also be produced in limited batches, with consequent substantial production costs.

These known recovery means, moreover, do not lend themselves to protecting the integrity of the belt in case of complete jamming of the belt, since the driving means, if they continued to operate, would cause the breakage of the belt or their own breakage.

These known recovery means generally have a bulky structure and limit the useful space for the product on the conveyor belt.

The aim of the present invention is to provide a device for transmitting motion for conveyor belts that solves the problems and drawbacks revealed by known driving means and elongation recovery means.

Within this aim, an object of the present invention is to provide a device for transmitting motion that is cheaper, simpler to install and more industrializable than known types.

Another object of the present invention is to provide a motion transmission device that can be installed easily on known conveyor belts.

Another object of the present invention is to provide a device for transmitting motion that optimizes the motion of the belt, avoiding accumulations and/or tensions, tears, plastic deformations and anything that may lead to malfunctions of the belt.

Another object of the present invention is to provide a movement device that can be installed on rectilinear belt portions as well as on the curved portions that are typical of spiral belts.

Another object of the invention is to provide a device that allows not only uniformity and continuity in torque transmission but also safety of the integrity of the belt and of the driving means.

Another object of the invention is to provide a motion transmission device that can also be installed on conveyor belts of a known type, which generally have an even slight accumulation of conveyor belt in output from a traction assembly, such accumulation typically causing the unwanted breakup of the product on the conveyor belt.

Another object of the present invention is to provide a device for transmitting motion for conveyor belts that can be manufactured with known systems and technologies.

This aim, as well as these and other objects that will become better apparent hereinafter, are achieved by a device for transmitting motion for conveyor belts, comprising a driving shaft and a driven gear or toothed belt, engaged with a chain for moving a conveyor belt, said device being **characterized in that** torque limiting means are interposed between said driving shaft and said gear or toothed belt.

Further characteristics and advantages of the invention will become better apparent from the following detailed description of two preferred but not exclusive embodiments of the device for transmitting motion for conveyor belts according to the invention, illustrated by way of non-limiting example in the accompanying drawings, wherein:
Figure 1 is a sectional front view of a device according to the invention in a first embodiment thereof;
Figure 2 is a top view of the device in the first embodiment of Figure 1;
Figure 3 is a sectional front view of the device according to the invention in a second embodiment thereof;
Figure 4 is a top view of the device in the second embodiment of Figure 3.

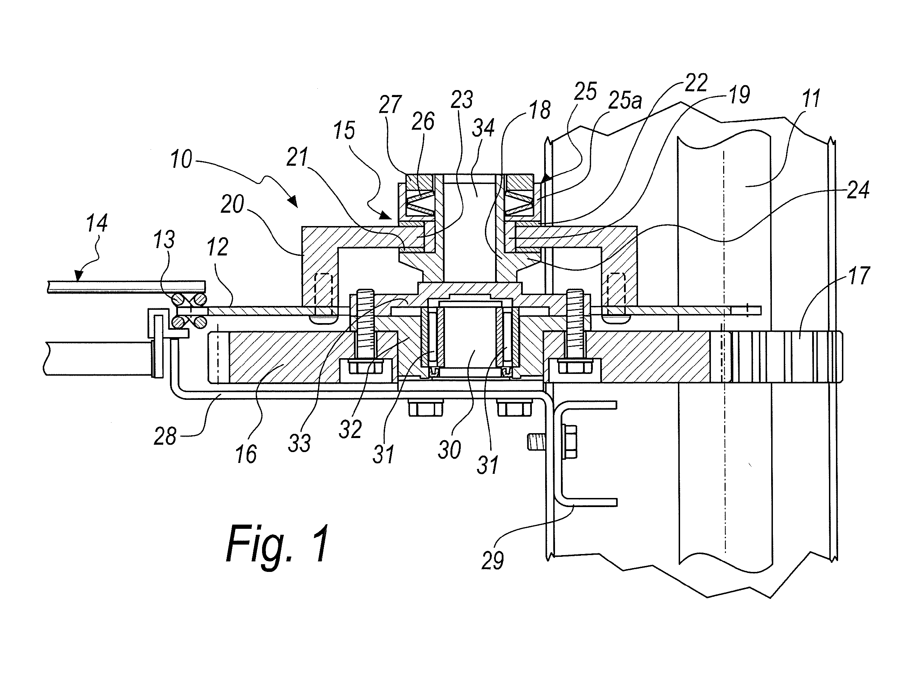

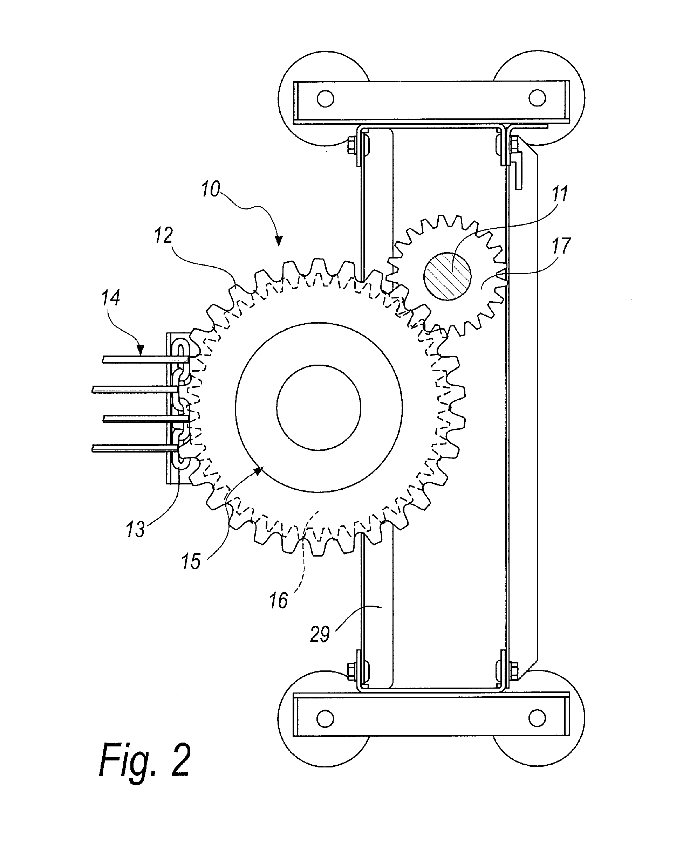

With reference to the figures, a device for transmitting motion for conveyor belts is generally designated by the reference numeral 10 in its first embodiment, shown in Figures 1 and 2.

The device 10 comprises a driving shaft 11 and a driven gear 12, which is engaged with a chain 13 for driving a conveyor belt 14.

Torque limiting means 15 are interposed between the driving shaft 11 and the gear 12.

In this first embodiment of the invention, which is a non-limiting example of the invention, the torque limiting means 15 are interposed between the spur gear 16, which is engaged with a pinion 17 that is keyed to the driving shaft 11, and the driven gear 12, which is engaged with the chain 13 of the conveyor belt 14.

In this embodiment of the device 10 according to the invention, which as mentioned is a non-limiting example, the torque limiting means 15 are of the friction type.

In particular, in the embodiment described herein, the torque limiting means 15 comprise
- a hub 18, which is fixed coaxially to the spur gear 16,
- a sliding ring 19, which is arranged so as to surround the hub 18 and is designed to allow relative rotation of a supporting body 20 for the gear 12 and the hub 18,
- two mutually opposite friction elements 21 and 22, which are arranged so as to surround the sliding ring 19, being extended so as to affect an interposed corresponding annular portion 23 of the supporting body 20 for the gear 12; a first friction element 21 being fixed to a corresponding shoulder 24 that is formed on the hub 18 and the opposite second friction element 22 being fixed to
- a thrust ring 25, which is shaped so as to surround the hub 18 and performing a translational motion and does not rotate with respect to it; the thrust ring 25 in turn being pushed against the interposed annular portion 23 of the supporting body 20 by
- an elastic element 26, whose compression is adjusted by
- a ring 27, which is screwed to the free end of the hub 18.

The elastic element 26 is, for example, a Belleville washer and is arranged within containment shoulders 25a that extend from the thrust ring 25.

The spur gear 16 is supported rotatably by a metal plate bracket 28, which is fixed to the frame 29 that supports the motion transmission device 10.

The spur gear 16 rotates about a pivot 30, which is firmly connected to the bracket 28, by interposition of bearings 31 and of a sleeve 32, which is interposed between the spur gear 16 and the bearings 31.

A flange 33 is fixed to the sleeve 32 and a pin 34 extends from such flange, the hub 18 being fixed thereto.

It should be understood that the device 10 according to the invention can be provided by using a toothed belt system instead of the cited gear 12.

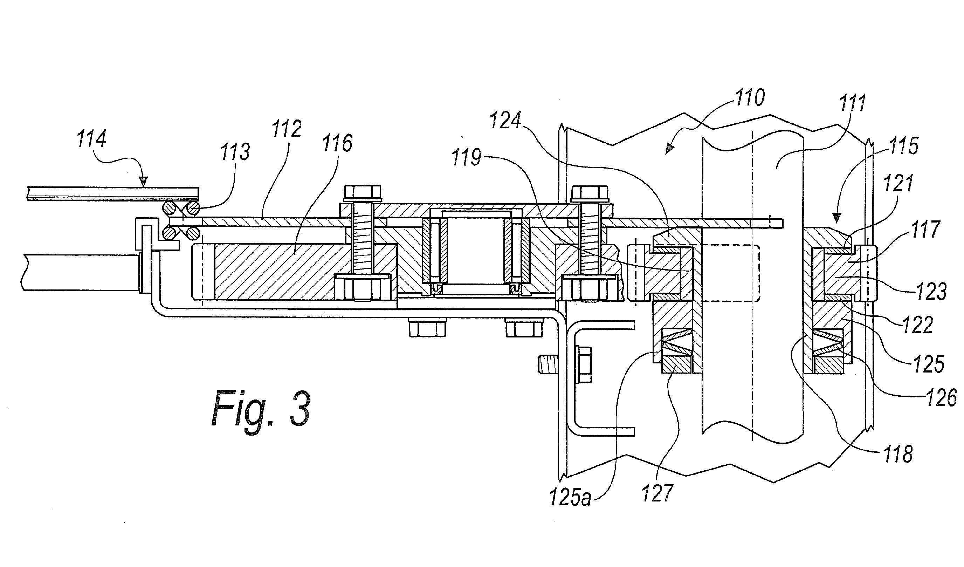

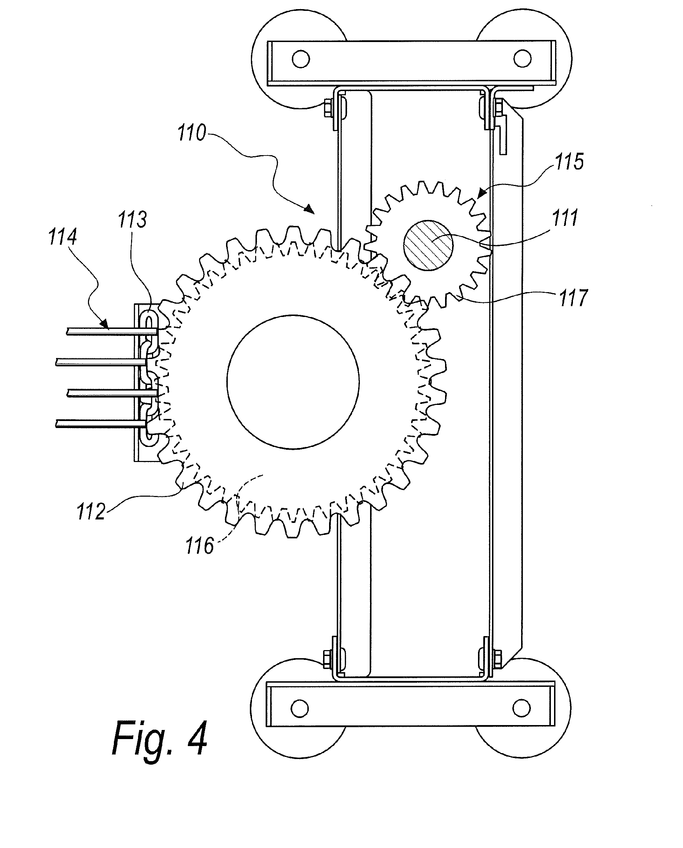

A second embodiment, which is also a non-limiting example of the device according to the invention, is shown in Figures 3 and 4 and is designated therein generally by the reference numeral 110.

The device 110 is **characterized in that** the torque limiting means 115 are interposed between the driving shaft 111 and the pinion 117, which is associated with the driving shaft 111.

The pinion 117, as in the first embodiment described above, is designed to turn a spur gear 116, which is firmly connected to the driven gear 112, which is engaged with a chain 113 of a conveyor belt 114.

The torque limiting means 115 are of the friction type in this example as well.

The torque limiting means 115 in particular comprise
- a hub 118, which is keyed onto the driving shaft 111;
- a sliding ring 119, which is arranged so as to surround the hub 118 and is designed to allow the relative rotation of the pinion 117, which in turn is engaged with the driven spur gear 116;
- two mutually opposite friction elements 121 and 122, which are arranged so as to surround the sliding ring 119 and are extended so as to affect an interposed corresponding annular portion 123 of the pinion 117; a first friction element 121 being fixed to a corresponding shoulder 124 that is formed on the hub 118, while the mutually opposite second friction element 122 is fixed to
- a thrust ring 125, which is shaped so as to surround the hub 118; the thrust ring 125 performing a translational motion and not rotating with respect to the hub 118 and in turn being pushed against the interposed annular portion 123 of the pinion 117 by
- an elastic element 126, whose compression is adjusted by
- a ring 127, which is screwed to the free end of the hub 118.

The elastic element 126 is constituted by a Belleville washer contained within corresponding shoulders 125a that extend from the thrust ring 125.

It should be understood that this second embodiment of the device 110 according to the invention, too, can be provided by means of a toothed belt system instead of the gear 112.

The operation of the device according to the invention is as follows.

For both embodiments, when the torque that arrives from the driving shaft 11 or 111 cannot be transmitted entirely to the gear or toothed belt 12 or 112 associated with the chain 13 or 113 of the belt 14 or 114, the difference in rotation rate between the gear or belt 12 and the spur gear 16 or between the pinion 117 and the driving shaft 111 causes the temporary compression of the elastic element 26 or 126, with slippage of the body 20 that supports the gear or belt 12 or of the pinion 117 with respect to the friction elements 21 and 22 or 121 and 122, respectively.

The friction elements 21, 22, 121 and 122 can be annular disks made of friction materials commonly known by the trade name Ferodo® or other equivalent materials.

In practice it has been found that the invention achieves the proposed aim and objects.

In particular, the invention provides a motion transmission device that is cheaper, simpler to install and more industrializable than known types by way of its reduced number of components, with quick and intuitive connection systems.

Further, the invention provides a motion transmission device that can be installed easily on known conveyor belts, since the chain of the belt and the driving shaft do not need to be modified.

Moreover, the invention provides a motion transmission device that optimizes the motion of the belt, avoiding accumulations and/or tensions, tears, plastic deformations and anything else that might lead to malfunctions of the belt, and a device that can be installed on rectilinear belt portions as well as on the curved portion that are typical of spiral belts.

Moreover, the present invention provides a device that allows not only uniformity and continuity in torque transmission but also assurance of the integrity of the belt and of the driving means, by way of the torque limiting means, which in any case allow, if one of the driving shaft or the belt jams suddenly, the part that is not jammed to continue in its operation without failing.

Moreover, by means of the invention a transmission device has been devised which can be used easily also for synchronization of driving assemblies with fixed transmission (with gears or of the pinion-and-chain type) which are independent and act on a single belt, and can be applied easily also to conveyors with multiple driving assemblies.

Further, the present invention provides a transmission device that allows to organize the space better than recovery means of the known type, by reducing the overall space occupation of the machinery to which the conveyor belt belongs, thus allowing the installation of bigger machinery than would be possible with the adoption of recovery means of a known type.

Moreover, the present invention provides a motion transmission device that can be also installed on conveyor belts of a known type, so as to prevent the typical accumulation, even a slight one, of conveyor belt in output from a driving assembly, thus limiting or eliminating the unwanted breakup of the product on the conveyor belt.

Moreover, the present invention provides a device for transmitting motion for conveyor belts that can be manufactured with known systems and technologies.

The invention thus conceived is susceptible of numerous modifications and variations, all of which are within the scope of the appended claims; all the details may further be replaced with other technically equivalent elements.

In practice, the materials used, as well as the contingent shapes and dimensions, may be any according to requirements and to the state of the art.

The disclosures in Italian Patent Application No. PD2009A000125 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device (10, 110) for transmitting motion for conveyor belts, comprising a driving shaft (11, 111) and a driven gear or toothed belt (12, 112), engaged with a chain (13, 113) for moving a conveyor belt (14, 114), said device being **characterized in that** torque limiting means (15, 115) are interposed between said driving shaft (11, 111) and said gear or toothed belt (12, 112).

2. The device according to claim 1, **characterized in that** said torque limiting means (15) are interposed between a spur gear (16) engaged with a pinion (17) that is keyed to the driving shaft (11), and said driven gear or toothed belt (12), which is engaged with a chain (13) of a conveyor belt (14).

3. The device according to claim 1, **characterized in that** said torque limiting means (115) are interposed between said driving shaft (111) and a pinion (117), associated with the driving shaft (111), designed to turn a spur gear (116) that is firmly connected to said driven gear or toothed belt (112), which is engaged with a chain (113) of a conveyor belt (114).

4. The device according to claim 1, **characterized in that** said torque limiting means (15, 115) are of the clutch type.

5. The device according to claim 1, **characterized in that** said torque limiting means (115) comprise
- a hub (18), which is fixed coaxially to said spur gear (16),
- a sliding ring (19) arranged so as to surround said hub (18) and designed to allow the relative rotation of a supporting body (20) for said gear or toothed belt (12) and said hub (18),
- two mutually opposite friction elements (21, 22), arranged so as to surround said sliding ring (19), being extended so as to affect an interposed corresponding annular portion (23) of said supporting body (20) for said gear (12), a first friction element (21) being fixed to a corresponding shoulder (24) formed on said hub (18), the opposite second friction element (22) being fixed to
- a thrust ring (25), which is shaped so as to surround said hub (18) and performs a translational motion and does not rotate with respect to it, and is in turn pushed against the interposed annular portion (23) of the supporting body (20) of the gear (12) by
- an elastic element (26) whose compression is adjusted by
- a ring (27), which is screwed onto the free end of said hub (18).

6. The device according to claim 1, **characterized in that** said torque limiting means (115) comprise
- a hub (118), which is keyed onto said driving shaft (111),
- a sliding ring (119), which is arranged so as to surround said hub (118) and is designed to allow the relative rotation of a pinion (117), which in turn is engaged with said driven spur gear (116),
- two mutually opposite friction elements (121, 122), arranged so as to surround said sliding ring and extended so as to affect an interposed corresponding annular portion (123) of said pinion (117), a first friction element (121) being fixed to a corresponding shoulder (124) formed on said hub (118), the opposite second friction element (122) being fixed to
- a thrust ring (125), which is shaped so as to surround said hub, performs a translational motion and does not rotate with respect to it, and is in turn pushed against the interposed annular portion (123) of the pinion (117) by
- an elastic element (126) whose compression is adjusted by
- a ring (127), which is screwed onto the free end of said hub.

7. The device according to claim 5, **characterized in that** said elastic element (26, 126) is a Belleville washer.
